# EUROPÄISCHE PATENTSCHRIFT

(11) **EP 0 758 285 B1**
(45) Veröffentlichungstag und Bekanntmachung des Hinweises auf die Patenterteilung: **11.11.1998**
(21) Anmeldenummer: 95915802.3
(22) Anmeldetag: 25.04.1995
(51) Int. Cl.: B23P 19/06, B23P 19/00

(54) **VORRICHTUNG ZUR VERWENDUNG IN EINER PRESSE ZUM ZUFÜHREN VON VERBINDUNGSELEMENTEN UND ZU DEREN BEFESTIGUNG IN WERKSTÜCKEN DURCH VERPRESSEN**
DEVICE FOR USE IN A PRESS FOR FEEDING FASTENING COMPONENTS AND FOR SECURING THESE COMPONENTS BY PRESSING IN WORK PIECES
DISPOSITIF DESTINE A ETRE UTILISE DANS UNE PRESSE POUR L'AMENEE D'ELEMENTS DE FIXATION ET LEUR FIXATION PAR PRESSAGE DANS DES PIECES

(30) Priorität: 06.05.1994 DE 4415973
(43) Veröffentlichungstag der Anmeldung: 19.02.1997
(73) Patentinhaber: MASCHINENBAU DIETER SCHMIDT, 93055 Regensburg (DE)
(72) Erfinder: SCHMIDT, Dieter, 93138 Lappersdorf (DE)
(74) Vertreter: Graf, Helmut, Dipl.-Ing.
(86) Internationale Anmeldenummer: DE9500538
(87) Internationale Veröffentlichungsnummer: WO9530513

(56) Entgegenhaltungen:
- EP-A- 0 579 474
- WO-A-94/03306
- US-A- 3 969 808
- US-A- 4 164 072
- US-A- 4 348 796

## Beschreibung

Die Erfindung bezieht sich auf eine Vorrichtung gemäß Oberbegriff Patentanspruch 1.

Die Herstellung von Werkstücken aus einem von einem Coil abgezogenen Blech (beispielsweise Stahlblech) oder aus Einzelblechen bzw. -Tafeln unter Verwendung einer Presse oder eines in einer solchen Presse angeordneten Werkzeugs (beispielsweise auch Folgewerkzeugs) durch Stanzen, durch bleibende Verformung usw. ist bekannt. Hierbei ist es auch bekannt, die Werkstücke beim Herstellen in der Presse zugleich auch mit Verbindungselementen zu versehen, und zwar durch Fügen oder Einsetzen des betreffenden Verbindungselementes in ein vorbereitetes (gestanztes) Loch und durch anschließendes Verpressen des Verbindungselementes im Werkstück.

Verbindungselemente sind u.a. auch Muttern oder Muttergewindestücke, die beispielsweise eine kreiszylinderförmige Umfangsfläche besitzen und an einer Stirnseite mit einem Bund versehen sind, mit dem die jeweilige Mutter in das vorbereitete Loch des Werkstückes eingreift und dort durch Verpressen befestigt wird.

Zum Zuführen und Befestigen speziell von Muttern in Werkstücken wurde bereits eine Vorrichtung gemäß Oberbegriff Patentanspruch 1 vorgeschlagen (P 43 40 642.4-14). Diese Vorrichtung besteht im wesentlichen aus einen Stanzkopf, der an einen von zwei gegenwirkenden Werkzeug- oder Pressenteilen vorgesehen ist und unter Vermittlung eines Einpreßstößels das Fügen des jeweiligen Verbindungselementes in das vorbereitete Loch des Werkstückes sowie auch unter Mitwirkung des anderen der gegenwirkenden Werkzeug- und Pressenteile das anschließende Befestigen bzw. Fixieren des Verbindungselementes im Werkstück durch Verpressen, d.h. durch bleibende Verformung des Materials des Werkstückes im Bereich des Loches bewirkt. Die bekannte Vorrichtung weist weiterhin eine starre Zuführung auf, an der eine Belade- und Vorschubeinrichtung vorgesehen ist und die zwischen dieser Beladeeinrichtung und dem Stanzkopf eine erste starre Förderstrecke bildet, die im Stanzkopf bzw. in einem dort gebildeten Stößelkanal endet und die sich in Transport- und Förderrichtung der Verbindungselemente an eine zweite, ebenfalls starre Förderstrecke anschließt, in deren Bereich die Vorschubeinrichtung vorgesehen ist, und zwar am Übergang zwischen den beiden Förderstrecken.

Bei dieser Vorrichtung weist die Vorschubeinrichtung ein als Vorschubschwinge ausgebildetes Vorschubelement auf, welches sich normalerweise in einer wirksamen Stellung befindet, in der es mit einer Fläche gegen das letzte Verbindungselement in der ersten Förderstrecke federnd anliegt und dadurch dieses Verbindungselement für eine Bewegung in Richtung Stanzkopf vorspannt.

Aus dieser wirksamen Stellung, die die Normalstellung der Vorschubschwinge ist, wird diese durch die Bewegung der gegenwirkenden Werkzeug- bzw. Pressenteile in eine nicht wirksame Stellung bewegt, in der sich die Vorschubschwinge außerhalb der starren Zuführung befindet, und zwar bei jedem Abwärtshub der Presse kurz vor Erreichen des unteren Totpunktes des Pressenhubes. Im unteren Totpunkt des Pressenhubes wird das im Stanzkopf bereitstehende Verbindungselement mit dem Werkstück verbunden. Bei der anschließenden Aufwärtsbewegung der Presse wird durch die in die Normalstellung, d.h. in die wirksame Stellung zurückkehrende Vorschubschwinge ein neues Verbindungselement aus der zweiten Förderstrecke in die erste Förderstrecke nachgeladen.

Nachteilig ist hierbei u.a., daß für das Nachladen aus der Beladeposition in die "erste" Förderstrecke nur eine relativ kurze Zeit zur Verfügung steht, nämlich die Zeit eines Teilhubes der Presse unmittelbar nach dem unteren Totpunkt.

Aufgabe der vorliegenden Erfindung ist es, diese Vorrichtung dahingehend weiterzubilden, daß die zum Nachladen zur Verfügung stehende Zeit wesentlich verlängert wird, so daß auch bei extrem hoher Leistung einer Presse (Anzahl der Hübe pro Zeiteinheit) eine Verbesserung der Betriebssicherheit erreicht wird.

Zur Lösung dieser Aufgabe ist eine Vorrichtung entsprechend dem kennzeichnenden Teil des Patentanspruches 1 ausgebildet.

Unter "Presse" ist im Sinne der Erfindung grundsätzlich eine Maschine mit wenigstens zwei relativ zueinander bewegbaren oder gegenwirkenden Werkzeug- oder Pressenteilen zu verstehen. Bevorzugt ist eine Presse eine Werkzeugpresse der eingangs erwähnten Art zum Herstellen von Werkstücken aus Blech durch Stanzen, bleibende Verformung usw.

Gegenwirkende Werkzeug- und Pressenteile sind in diesem Zusammenhang solche Teile der Presse oder des an dieser Presse vorgesehenen Werkzeugs, die in einer Achsrichtung, vorzugsweise in einer vertikalen Achse relativ zueinander bewegt werden und direkt oder indirekt auf das herzustellende Werkstück oder auf das hierfür verwendete Blech einwirken.

Derartige Werkzeuge- oder Pressenteile sind beispielsweise der entsprechend im Pressenhub auf- und abgehende Niederhalter einerseits und das mit diesen zusammenwirkende Gegenwerkzeug andererseits, aber auch beispielsweise dieses Gegenwerkzeug tragende Element der Presse, z.B. eine Aufspannplatte am Pressentisch oder eine dort befestigte Zwischenplatte für das Gegenwerkzeug usw.

Eine Besonderheit der erfindungsgemäßen Vorrichtung besteht u.a. darin, daß sich das Vorschubelement normalerweise in der nicht wirksamen Stellung befindet, d.h. diese nicht wirksame Stellung die Normalstellung des Vorschubelementes ist, und lediglich für den Vorschlub bzw. für das Nachladen eines Verbindungselementes in die erste Förderstrecke aus dieser nicht wirksamen Stellung für eine Vorschubbewegung oder einen Vorschubhub und einen anschließenden Rückbewegung bzw. Rückhub bewegt wird, so daß abzüglich dieser kurzen Ladezeitdauer, die für den Vorschubhub und dem Rückhub benötigt wird, die gesamte oder doch nahezu die gesamte Zeitdauer eines vollen Pressenhubes für das Nachführen eines Verbindungselementes an die Beladeposition zur Verfügung steht. Weiterhin kann auch das Nachladen durch das Vorschubelement weitestgehend unabhängig von dem Pressenhub erfolgen, selbstverständlich aber nur derart, daß dieses Nachladen jeweils abgeschlossen ist, bevor der untere Totpunkt der Fressenbewegung erreicht wird.

Bei der erfindungsgemäßen Vorrichtung ist an der Beladestation ein Anschlag für jeweils zugeführte Verbindungselemente vorgesehen, der (Anschlag) von diesem Verbindungselement erst beim Nachladen, d.h. beim Weiterbewegen durch das Vorschubelement überwunden wird.

Bei der erfindungsgemäßen Vorrichtung sind die Verbindungselemente bevorzugt Muttern, die mit ihren Achsen parallel zueinander und senkrecht zur Vorschubrichtung orientiert sind, und zwar nicht nur in der starren Zuführung, die zusammen mit dem Stanzkopf und der Beladeeinrichtung eine komplette Baueinheit bildet, sondern auch in einer äußeren Zuführung, über die die Muttern von einer Versorgungs- oder Zuführeinrichtung an die Vorrichtung gelangen.

Das Zuführen der Verbindungselemente an die Beladeposition erfolgt dadurch, daß die Verbindungselemente jeweils einzeln und zeitlich nacheinander mit Hilfe von Druckluft über die äußere Zuführung und die zweite Förderstrecke an die Beladeposition "eingeschossen" werden. Die Steuerung der äußeren Zuführeinrichtung und der Beladeeinrichtung erfolgen über eine Steuerelektronik in Abhängigkeit von an der starren Zuführung vorgesehenen Sensoren bzw. deren Steuersignale beispielsweise so, daß immer dann, wenn an der Beladeposition eine vorgegebene Anzahl von Verbindungselementen nicht vorhanden ist, Verbindungselemente an die Beladeposition durch Einschießen gefördert werden, und zwar solange, bis dort die erforderliche Anzahl von Verbindungselementen vorhanden ist und/oder daß dann, wenn im Stanzkopf oder im dortigen Stößelkanal ein Verbindungselement nicht vorhanden ist, durch Bewegen des Vorschubelementes sowie durch Einschießen von Verbindungselementen an die Beladeposition die erste Förderstrecke solange nachgeladen wird, bis das erste, in dieser Förderstrecke vorhandene Verbindungselement sich im Stößelkanal befindet.

Eine erste Sensoranordnung befindet sich dabei am Stanzkopf bzw. am dortigen Stößelkanal. Eine zweite Sensoranordnung befindet sich im Bereich der Vorschubeinrichtung, wobei die erste Sensoreinrichtung jeweils das Fehlen eines Verbindungselementes am Stanzkopf registriert und das Einschießen eines Verbindungselementes an die Beladeposition sowie auch das Nachladen durch die Vorschubeinrichtung veranlaßt, während die zweite Sensoreinrichtung im wesentlichen das Vorhandensein eines Verbindungselementes an der Beladeposition und/oder das Einschießen eines Verbindungselementes an diese Beladeposition registriert.

Weiterbildungen der Erfindung sind Gegenstand der Unteransprüche.

Die Erfindung wird im Folgenden anhand der Figuren an einem Ausführungsbeispiel näher erläutert. Es zeigen:

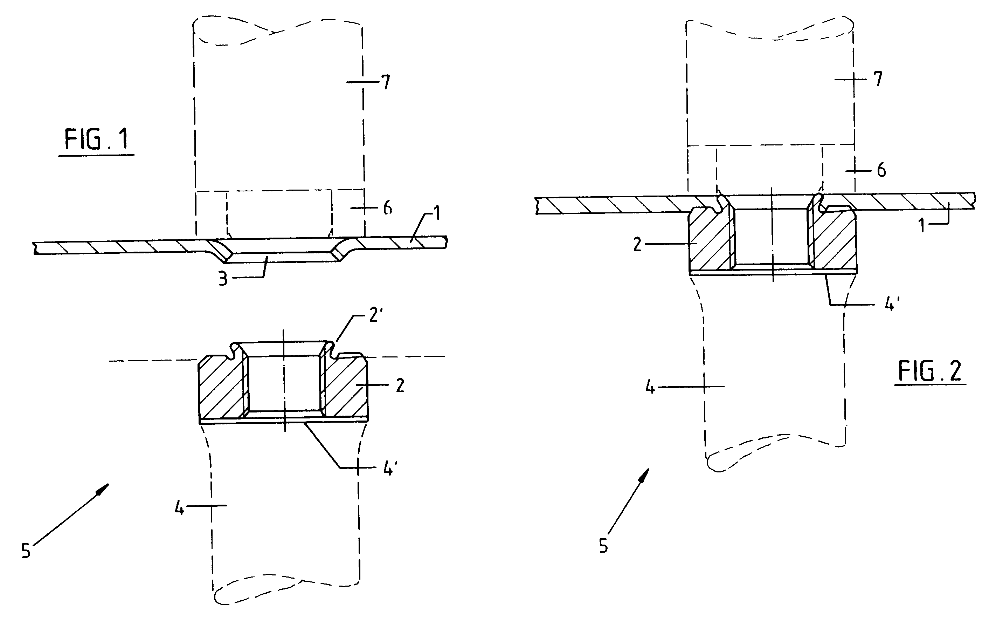

- Fig. 1 und 2: ein Verbindungselement in Form einer Mutter und ein Blech oder ein Werkstück vor dem Einsetzen dieser Mutter in ein im Werkstück vorbereitetes Loch bzw. nach dem Einsetzen und Befestigen der Mutter im Werkstück durch Verpressen;

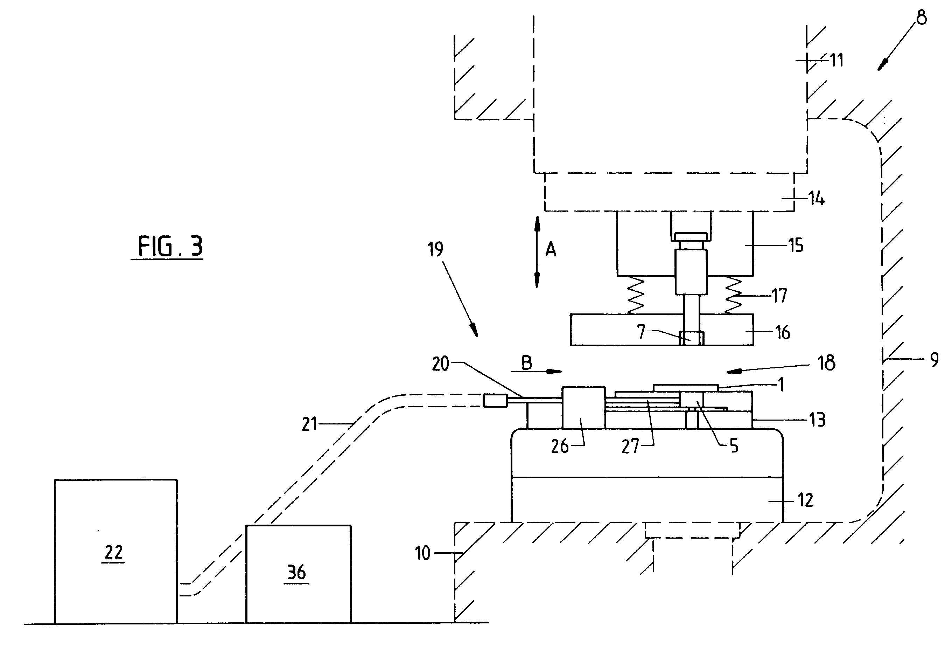

- Fig. 3: in vereinfachter Darstellung und in Seitenansicht eine Ausführungsform der erfindungsgemäßen Vorrichtung zusammen mit einer Presse sowie mit einem in der Presse vorgesehenen Werkzeug, beispielsweise Folgewerkzeug besteht;
- Fig. 4: in vergrößerter Teildarstellung und im Schnitt die erfindungsgemäße Vorrichtung;

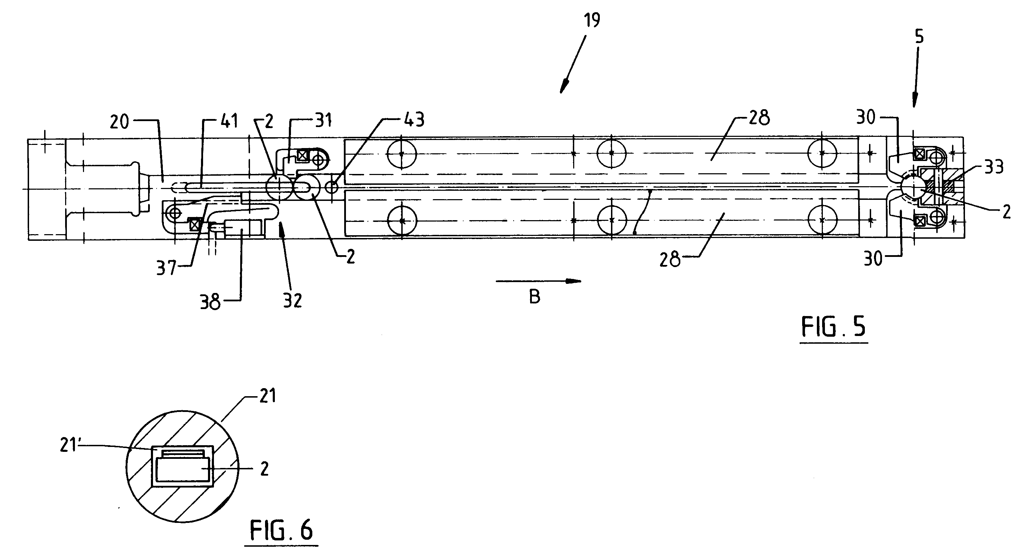

- Fig. 5: in vereinfachter Darstellung einen Horizontalschnitt durch die Vorrichtung der Fig. 4;
- Fig. 6: einen Schnitt durch einen Schlauch zum Zuführen der Verbindungselemente an die Vorrichtung.

In den Figuren ist 1 ein aus einem Blech durch Stanzen hergestelltes Werkstück, welches der einfacheren Darstellung wegen als flaches Werkstück wiedergegeben ist, aber auch jede andere erforderliche Formgebung aufweisen kann.

Mit 2 ist ein Verbindungselement bezeichnet, welches bei der dargestellten Ausführungsform als Mutter ausgeführt ist, die mit einem Bund 2' in einer in das Werkstück durch Stanzen eingebrachten Öffnung 3 durch Einsetzen oder Einfügen und durch anschließendes Verpressen unter Verwendung eines Einpreßstößels 4 (Plunger) eines Stanzkopfes 5 und eines Verpreßringes 6 eines Gegenwerkzeuges 7 im Werkstück 1 befestigbar ist.

Die Herstellung des Werkstückes 1 erfolgt in einer Presse 8, und zwar in einem in dieser Presse vorgesehenen Werkzeug, welches beispielsweise ein Folgewerkzeug ist und u.a. auch das Gegenwerkzeug 7 mit dem Preßring 6 aufweist. Wie nachstehend noch näher beschrieben wird, erfolgt bei der dargestellten Ausführungsform das Einsetzen des jeweiligen Verbindungselementes in die zugehörige Öffnung 3 von unten her.

Die Presse 8 besteht im wesentlichen aus einem Pressengestell 9, welches das Unterteil 10 der Presse bildet und an welchem in vertikaler Richtung auf- und abbewegbar der Pressenstößel 11 geführt ist.

Am unteren Teil 10 ist eine Aufspannplatte 12 vorgesehen, auf der direkt oder über eine Zwischenplatte das untere Werkzeugteil 13 befestigt ist. An der Unterseite des Pressenstößels 11 ist eine Aufspannplatte 14 vorgesehen, an welcher in oberes Werkzeugteil 15 in Form einer Stempelplatte befestigt ist.

Weiterhin weist die Presse 8 einen gefederten Niederhalter 16 auf, der zwischen dem oberen Werkzeugteil 15 und dem unteren Werkzeugteil 13 angeordnet ist und sich bei geschlossener Presse 8 über die Kraft von Niederhalterfeder 17, die zwischen dem Niederhalter 16 und dem Werkzeugteil 15 wirken, gegen das Werkstück 1 abstützt. Im Niederhalter 16 ist beispielsweise auch das als Schieber oder Stößel (Plunger) ausgebildete Gegenwerkzeug 7 vorgesehen.

Zum gesteuerten Zuführen der Muttern 2 an den "Einsetzbereich" 18 des Werkzeugs, an den (Einsetzbereich) diese Muttern jeweils in die betreffende Öffnung 3 eines Werkstückes 1 eingesetzt werden, dient die in den Figuren insgesamt mit 19 bezeichnete Vorrichtung, welche am unteren Werkzeugteil 13 montiert ist, und zwar derart, daß sich der Stanzkopf 5 am Einsetzbereich 18 befindet.

Die Vorrichtung 19 bildet eine starre Förderstrecke 20, die mit ihrem einen Ende über einen flexiblen Schlauch 21 mit einer Sortier- und Zuführeinrichtung 22 verbunden ist. Über diese Sortier- und Zuführeinrichtung 22, die seitlich von der Presse 8 aufgestellt ist, werden die Muttern 2 jeweils in einer vorgeschriebenen Lage bzw. Orientierung (lagegenau) einzeln der Vorrichtung 19 bzw. der Förderstrecke 20 zugeführt, und zwar durch Einschießen über den Schlauch 21, wofür die Sortier- und Zuführeinrichtung, aber auch die Vorrichtung 19 in einer nachstehend noch näher beschriebenen Weise gesteuert werden. Für die lagegenaue Zuführung der Muttern 2 weist der Schlauch 21 einen Kanal 21' mit rechteckförmigem Querschnitt auf, und zwar in der Weise, daß die Muttern 2 in diesen Querschnitt dann passen, wenn sie mit ihrer Achse in vertikaler Richtung orientiert und mit ihrem Bund 2' oben liegend angeordnet sind.

Die allgemeine Förderrichtung der Förderstrecke 20 ist in den Figuren mit dem Pfeil B angegeben. Die Förderstrecke besteht beispielsweise im wesentlichen aus einer Führungsnut oder einem Förderkanal 23, die in einem Träger 24 ausgebildet ist und an ihrer Oberseite durch eine Platte 25 verschlossen ist.

An dem dem Schlauch 21 abgewandten Ende der Förderstrecke 20 ist eine Belade- und Vorschubeinrichtung 26 gebildet, deren konstruktive Ausgestaltung nachfolgend noch näher im Detail beschrieben wird. Die Förderstrecke 20 geht dort in eine Förderstrecke 27 über, die ebenso wie die im Vergleich zur Förderstrecke 27 kürzere Förderstrecke 20 starr und geradlinig durch die Führungsnut 23 im Träger 24 gebildet ist und an ihrem der Einrichtung 26 entfernt liegenden Ende den Stanzkopf 5 aufweist.

Zur Bildung der Förderstrecke 27 ist die Führungsnut 23 durch zwei Platten 28 an der Oberseite des Trägers 24 bis auf einen in der Mitte der Förderstrecke 27 in Längsrichtung erstreckenden schmalen Schlitz verschlossen.

Während des Betriebes ist die Förderstrecke 27 mit einer vorgegebenen Anzahl von Muttern 2 besetzt, und zwar derart, daß diese Muttern in Längsrichtung oder Förderrichtung B der Förderstrecke 27 dicht aneinander anschließen und sich bei jedem Abwärtshub der Presse eine genau vorgegebene Anzahl von Muttern in der Förderstrecke befindet, und zwar mit der ersten Mutter 2 an dem der Einrichtung 26 entfernt liegenden Ende der Förderstrecke 27 im Bereich des Stanzkopfes 5 bzw. im Bereich eines dort gebildeten, die Förderstrecke 27 schneidenden Stößelkanals 29.

An der Förderstrecke 27 sind mehrere gefederte Rückhalteelemente oder Rücklaufsperren 30 und 31 vorgesehen, und zwar die beiden Rücklaufsperren 30 am Stanzkopf 5 bzw. am dortigen Stößelkanal 29 und die Rücklaufsperre an dem der Vorrichtung 26 benachbarten Ende der Förderstrecke 27. Die Rücklaufsperren 30 und 31 sind jeweils gegen die Wirkung einer Druckfeder oder eines anderen Federelementes um eine vertikale Achse schwenkbare Hebel, die mit einem Hakenende in die Förderstrecke 27 derart hineinreichen, daß sie den in Förderrichtung (Pfeil B) sich bewegenden Muttern 2 ausweichen, ein Vorbeibewegen der Muttern 2 entgegen der Förderrichtung B aber verhindern. Durch die beiden Rücklaufsperren 30 ist somit die jeweilige Mutter 2 im Stanzkopf 5 bzw. im Stößelkanal 29 zuverlässig gehalten bzw. positioniert. Durch die Rücklaufsperre 31 ist gewährleistet, daß solche Muttern 2, die in der nachstehend noch näher beschriebenen Weise in die Förderstrecke 27 eingeführt oder nachgeladen wurden, aus der Förderstrecke nicht zurück in die Vorrichtung 26 oder zurück an eine Beladeposition 32 gelangen können, die in Förderrichtung B unmittelbar vor der Rücklaufsperre 31 gebildet ist.

An dem der Vorrichtung 26 entfernt liegenden Ende der Förderstrecke 27, d.h. im Stößelkanal 29 des Stanzkopfes 5 ist weiterhin eine gegen eine Federkraft schwenkbare Klinke 33 vorgesehen, die mit einem elektrischen Sensor, beispielsweise mit einem Näherungssensor zusammenwirkt und gegen die Wirkung einer Rückstellfeder in eine aktivierte Stellung geschwenkt wird, wenn sich im Stößelkanal 29 eine Mutter 2 befindet. In diesem Zustand gibt der Sensor ein das Vorhandensein einer Mutter bestätigendes positives Signal an eine Steuereinrichtung 36, die die Vorrichtung 19, insbesondere auch deren Beladeeinrichtung und die Zuführeinrichtung 22 steuert.

An der Einrichtung 26 ist in Förderrichtung B vor der Beladeposition 32 ein unter der Wirkung einer Feder stehende schwenkbare Klinke 37 vorgesehen, die mit einem Sensor 38, beispielsweise einem Näherungsschalter zusammenwirkt und beim Vorbeibewegen einer Mutter 2 an die Beladeposition 32 kurzzeitig aus der nicht aktivierten Stellung seitlich in die aktivierte Stellung geschwenkt wird. Der Sensor 38 liefert hierbei an die Steuereinrichtung 36 ein das Vorbeibewegen einer Mutter 2 bestätigendes zweites Steuersignal.

Als Vorschubelement weist die Einrichtung 26 eine Vorschubschwinge 39 auf, die mit ihrem unteren Ende unterhalb des Niveaus der Förderstrecken 20 und 27 mittels eines Gelenkbolzens 40 um eine horizontale, senkrecht zur Förderrichtung A liegende Achse schwenkbar ist, d.h. um eine Achse, die senkrecht zur Förderrichtung und zugleich auch senkrecht zu der Achse der Muttern 2 in den Förderstrecken 20 und 27 liegt.

Bei der dargestellten Ausführungsform ist die Vorschubschwinge 39 aus Flachmaterial im wesentlichen ähnlich einem flachen Hebel hergestellt und liegt mit ihren größeren Oberflächenseiten senkrecht zur Achse des Gelenkbolzens 40.

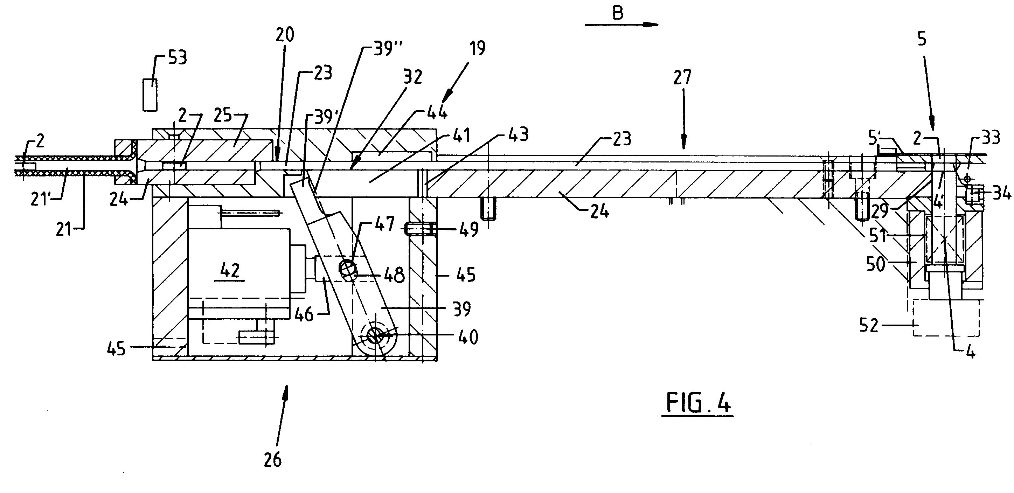

Die Länge der Vorschubschwinge 38 sowie der Schwenkwinkel für diese Schwinge sind so gewählt, daß das obere, dem Gelenkbolzen 40 entfernt liegende Ende bzw. ein dieses Ende bildender schwertartiger flacher Abschnitt 39' der Schwinge und eine von diesem Abschnitt gebildete Vorschubfläche 39'' in der in der Fig. 4 dargestellten, nicht wirksamen Stellung bzw. Normal- oder Ausgangsstellung der Schwinge 39 von dem Stanzkopf 5 weg zur Forderstrecke 20 hin geschwenkt sind und sich unterhalb der Ebene der Förderstrecken 20 und 27 befinden, so daß sich Muttern 2 oberhalb an der in die nicht wirksame Stellung geschwenkten Vorschubschwinge 39 an dieser vorbei an die Beladeposition 32 bewegen können. In der wirksamen Stellung, in der die Schwinge mit ihrem Abschnitt 39' bzw. mit ihrer Vorschubfläche 39'' in Richtung Stanzkopf 5 geschwenkt ist und mit ihrer Längserstreckung im wesentlichen in vertikaler Richtung angeordnet ist, ragt der Abschnitt 39' durch einen Schlitz 41 von unten her in den im Bereich der Einrichtung 26 verlaufenden Teil der Förderstrecke 20 hinein.

Das Schwenken der Vorschubschwinge 39 erfolgt durch einen doppelt wirkenden Pneumatikzylinder 42, und zwar wiederum gesteuert durch die Steuereinrichtung 36.

Die grundsätzliche Arbeitsweise der Vorrichtung 19, die mit dem Stanzkopf 5, den starren Förderstrecken 20 und 27 und der Einrichtung 26 eine komplette Baueinheit bilden und als solche in der Presse 8 bzw. in dem dortigen Werkzeug montiert und demontiert werden kann, läßt sich, wie folgt, beschreiben:

Bewegt sich die Presse 8 in ihren unteren Totpunkt, so erfolgt dann, wenn der Niederhalter 16 gegen das Werkstück 1 anliegt, das Einschieben einer im Stanzkopf bereitstehenden Mutter von unten her in die Öffnung 3 des Werkstückes 1, und zwar mit Hilfe des Einpreßstößels 4, der durch einen im Werkzeugteil 13 vorgesehenen und durch die Bewegung des Werkzeugs, beispielsweise durch die Bewegung des Niederhalters 16 nach oben bewegten Stößel bewegt wird. Beim weiteren Abwärtshub der Presse 8 erfolgt dann das Befestigen der Mutter 2 im Werkstück 1 in der vorbeschriebenen Weise durch Verpressen.

Die Vorschubschwinge 39 befindet sich in ihrer Ausgangs- oder Normals tellung. Die letzte in der Förderstrecke 27 vorgesehene Mutter 2 ist durch die Rücklaufsperre 31 und die erste, im Stanzkopf 5 bzw. im Stößelkanal 29 befindliche Mutter 2 durch die Rücklaufsperren 32 gesichert bzw. in der richtigen Position gehalten ist, und zwar zumindest solange, bis diese Mutter von dem Einpreßstößel 4 erfaßt und in den oberen Teil des Stößelkanals 29 bewegt worden ist.

Ist die im Stößelkanal 29 befindliche Mutter 2 entsorgt, d.h. diese Mutter am Werkstück 1 befestigt, so wird nach dem Verlassen des unteren Totpunktes der Bewegung der Presse über die Steuereinrichtung 36 die Zuführeinrichtung 22 aktiviert, so daß dann von dieser Zuführeinrichtung über den Schlauch 21 mit Druckluft eine weitere Mutter 2 in die Förderstrecke 20 eingeschossen wird, die dann an die Beladeposition 32 gelangt. Die Federkraft der dortigen Rücklaufsperre 31 ist so eingestellt, daß diese die eingeschossene Mutter an der Beladeposition 32 stoppt. Die eingeschossene Mutter hat zuvor die Klinke 37 passiert, so daß der Sensor 38 das zweite Sensorsignal an die Steuereinrichtung 36 geliefert hat, diese Steuereinrichtung also das Vorhandensein einer neuen Mutter 2 an der Beladeposition 32 bestätigt hat. Im Anschluß daran wird der Zylinder 42 für ein Schwenken bzw. einen Vorschubhub und anschließenden Rückhub der Vorschubschwinge 39 aus der Ausgangsstellung in ihre wirksame Stellung (Vorschubstellung) und zurück in die Ausgangsstellung aktiviert, wodurch die an der Beladeposition 32 bereitstehende Mutter 2 an der Rücklaufsperre 31 vorbei in die Förderstrecke 27 geschoben oder nachgeladen und hierbei die gesamte Reihe von Muttern 2 um den Betrag einer Mutter weiterbewegt wird, so daß wiederum die erste, in der Förderstrecke 27 befindliche Mutter in den Stößelkanal 29 gelangt. Ist durch die Klinke 33 und den zugehörigen Sensor 34 das Vorhandensein einer Mutter im Stößelkanal 29 festgestellt, d.h. liegt das erste Steuersignal vor, so verbleibt die Vorschubschwinge 39 in ihrer nicht wirksamen Stellung. Die Zuführeinrichtung 22 wird nicht erneut für das Einschießen einer Mutter 2 betätigt. Der letztgenannte Zustand ist erreicht, bevor die Presse 8 sich erneut ihrem unteren Totpunkt annähert bzw. diesen erreicht.

Eine Sicherung der jeweiligen Mutter 2 in der Beladeposition 32 erfolgt durch Klinke 37. Bestehen die Muttern 2 aus einem ferromagnetischem Material, so kann in der Beladeposition 32 eine zusätzliche Sicherung der jeweiligen Mutter 2 durch einen Permanent-Magneten 44 erfolgen, der an der Beladeposition 32 oberhalb der Förderstrecke vorgesehen ist, und zwar derart, daß dieser Magnet 44 auf die jeweilige Mutter 2 an der Beladeposition 32 eine in Förderstrecke B wirkende Kraft ausübt, was beispielsweise dadurch erreicht wird, daß der magnetische Schwerpunkt bzw. der Schwerpunkt der Magnetfeldlinien des Permanentmagneten 44 zur Rücklaufsperre 31 hin versetzt ist. Ein weiterer Magnet 43 ist am Anfang der Föderstrecke 27 vorgesehen.

Eine Besonderheit der Vorrichtung 19 besteht auch darin, daß durch die Wirkung der Rücklaufsperren 30 und 31 die Vorschubschwinge 39 nur jeweils für eine kurze Vorschubbewegung aus der Ausgangsstellung in die Vorschubstellung geschwenkt wird und sich ansonsten in der Ausgangsstellung befindet, so daß auch bei schneller Arbeitsweise der Presse 8 genügend Zeit für das Einschießen einer Mutter 2 an die Beladeposition 32 verbleibt.

Ist die Förderstrecke 27 vollständ leer, wie dies beispielsweise bei der ersten Inbetriebnahme der Vorrichtung 19 der Fall ist, so erfolgt durch die Steuereinrichtung 36 ein zeitlich aufeinanderfolgendes mehrfaches Einschießen jeweils einzelner Muttern 2 an die Beladeposition 32 mit jeweils anschließendem Schwenken der Vorschubschwinge 39 aus der Ausgangsstellung in die Vorschubstellung, zum Einschieben der jeweils eingeschossenen Mutter 2 in die Förderstrecke 27, und zwar solange, bis das vom Sensor 34 gelieferte erste Sensorsignal das Vorhandensein einer Mutter 2 an dem Stößelkanal 29 bestätigt und hierdurch das Einschießen der Muttern 2 durch die Zuführeinrichtung 22 beendet wird. Es versteht sich, daß auch bei diesem vollständigen Laden der Förderstrecke 27 der Zylinder 42 für den Vorschubhub jeweils nur dann betätigt wird, wenn zuvor durch das zweite Steuersignal des Sensors 34 das Vorhandensein einer Mutter 2 an der Beladeposition 32 bestätigt wurde.

Die Vorrichtung 19 gewährleistet eine einwandfreie Zuführung der Muttern 2 an den Stanzkopf 5. Durch das einzelne Einschießen der Muttern 2 über den Schlauch 21 und die leere Förderstrecke 20 an die Beladeposition 32 mittels Druckluft ist auch eine einwandfreie Zuführung der Muttern 2 an diese Beladeposition 32 gewährleistet, und zwar auch dann, wenn der Schlauch 21 eine große Länge aufweist und stark gekrümmt ist. Ein gegenseitiges Verklemmen der Muttern 2 im Schlauch 21 ist nicht möglich.

Durch einen nicht dargestellten Sensor ist weiterhin sichergestellt, daß die Steuerung der Funktionen synchron mit dem Pressenhub erfolgt.

Nachfolgend werden die Einrichtung 26 sowie der Stanzkopf 5 noch näher im Detail erläutert.

### Belade- und Vorschubeinrichtung 26

Wie oben bereits erwähnt wurde, sind wesentliche Elemente dieser Einrichtung die Vorschubschwinge 39 und der diese Vorschubschwinge betätigende Zylinder 42. Zur Halterung dieser Elemente ist an der Unterseite des Trägers 24 ein Gehäuse 45 befestigt, mit welchem der Zylinder 42 vorgesehen und auch die Vorschubschwinge 39 schwenkbar gelagert ist. Die Kolbenstange 46 des Zylinders 42 greift über einen Bolzen 47 in ein Langloch 48 ein, welches etwa in der Mitte der hebelartigen Vorschubschwinge 39 vorgesehen ist. Mit 49 ist ein verstellbarer Anschlag für die Vorschubschwinge 39 bezeichnet, mit dem die Vorschubposition dieser Vorschubschwinge exakt einstellbar ist.

Der auf die Beladeposition 32 in Transportrichtung B folgende Permanentmagnet 43 unterstützt das Weiterbewegen einer Mutter 2 aus der Beladeposition 32 in die Förderstrecke 27 und verhindert auch ein Zurückbewegen der nachgeladenen Mutter 2. Mit 52 ist eine Plungerplatte bezeichnet, über die der Einpreßstößel 4 betätigt wird. Mit 53 ist ein weiterer Sensor bezeichnet, der auf die Rücklaufsperre 31 folgend am Anfang der Förderstrecke 27 vorgesehen ist und der überprüft, ob sich tatsächlich unmittelbar nach der Beiadeposition 32 eine Mutter 2 am Anfang der Förderstrecke 27 befindet.

### Stanzkopf 5

Der Stanzkopf 5 bildet an dem der Einrichtung 26 entfernt liegenden Ende der Förderstrecke 27 die mit seiner Achse in Richtung des Pressenhubes erstreckenden Stößelkanal 29, der an der Oberseite 5' des Stanzkopfes 5 zum Aufbringen der jeweiligen Mutter 2 offen ist. In diesem Strößekanal bzw. in einem am Träger 24 befestigten Gehäuse 50 des Stanzkopfes 5 ist gegen die Wirkung eine Druckfeder 51 der Einpreßstößel 4 verschiebbar, und zwar aus einer unteren, nicht wirksamen Stellung, in der der Einpreßstößel 4 mit seiner oberen Stirnfläche in der Förderebene der Förderstrecke 27 liegt, in eine angehobene Stellung, in der dann die auf der Stirnfläche des Einpreßstößels 4 aufliegende Mutter 2 soweit angehoben ist, daß diese zumindest mit ihrem Bund 2'' zum Einführen in das Werkstück 1 und zum dortigen Verpressen über die Oberseite 5' vorsteht.

Die Erfindung wurde voranstehend an einem Ausführungsbeispiel beschrieben. Es versteht sich, daß Änderungen sowie Abwandlungen möglich sind, ohne daß dadurch der der Erfindung zugrundeliegende Erfindungsgedanke verlassen wird.

Grundsätzlich ist es auch möglich, die Beladeposition 32 so auszubilden, daß dort in Transportrichtung B aufeinander folgend wengistens zwei Muttern 2 Platz finden wobei dann bei jeder Vorschubbewegung der Vorschubschwinge 39 bei normaler Arbeitsweise eine Mutter 2 in die Förderstrecke 27 hineinbewegt wird, während die zweite Mutter 2 an der Beladeposition 32 in Reserve verbleibt, und zwar für den Fall, daß eine weitere Mutter nicht rechtzeitig an die Beladeposition 32 nachgeschossen wird. Es versteht sich, daß in diesem Fall die Vorschubschwinge 39 unterschiedlich große Hübe ausführen kann. Die Steuerung der Zuführeinrichtung 22 erfolgt dann über die Steuereinrichtung 36 in Abhängigkeit von dem vom Sensor 38 gelieferten zweiten Steuersignal in der Weise, daß ein Nachschießen der Muttern 2 auf jeden Fall dann erfolgt, wenn sich an der Beladeposition 32 nicht zwei Muttern 2 befinden.

### Bezugszeichenliste

- 1: Werkstück
- 2: Mutter
- 2': Bund
- 3: Öffnung
- 4: Einpreßstößel
- 4': Stirnfläche
- 5: Stanzkopf
- 5': Oberseite
- 6: Einpreßring
- 7: Gegenwerkzeug
- 8: Presse
- 9: Pressengestell
- 10: Pressenunterteil
- 11: Pressenstößel
- 12: Aufspannplatte
- 13: Werkzeugteil
- 14: Aufspannplatte
- 15: Stempelplatte
- 16: Niederhalter
- 17: Niederhalterfeder
- 18: Einsetzbereich
- 19: Vorrichtung
- 20: Förderstrecke
- 21: Schlauch
- 21': Kanal
- 22: Zuführeinrichtung
- 23: Förderkanal
- 24: Träger
- 25: Platte
- 26: Belade- und Vorschubeinrichtung
- 27: Förderstrecke
- 28: Platte
- 29: Stößelkanal
- 30, 31: Rücklaufsperre
- 32: Beladeposition
- 33: Klinke
- 34: Sensor
- 36: Steuereinrichtung
- 37: Klinke
- 38: Sensor
- 39: Vorschubschwinge
- 39': Abschnitt
- 39'': Vorschubfläche
- 40: Gelenkbolzen
- 41: Schlitz
- 42: Zylinder
- 43, 44: Magnet
- 45: Gehäuse
- 46: Kolbenstange
- 47: Bolzen
- 48: Langloch
- 49: Anschlag
- 50: Gehäuse
- 51: Druckfeder
- 52: Plungerplatte
- 53: Sensor

## Patentansprüche

1. Vorrichtung zum Zuführen von Verbindungselementen, insbesondere von Muttern (2), für deren Befestigung in Werkstücken (1) durch Fügen und Verpressen, zur Verwendung in einer Presse (8)
mit einem Stanzkopf (5), mit dem das Fügen und Verpressen der Verbindungselemente (2) erfolgt,
mit einer Vorschub- und Beladeeinrichtung (26), und
mit einer starren Zuführung (20, 27),
wobei die Vorrichtung mit ihrem Stanzkopf (5), mit ihrer Beladeeinrichtung (26) und mit ihrer ersten Förderstrecke (27) an einem von zwei gegenwirkenden Werkzeug- oder Pressenteilen befestigbar ist,
wobei die Verbindungselemente jeweils einzeln der Beladeposition (32) der Beladeeinrichtung (26) zugeführt und durch ein dortiges Vorschubelement jeweils von der Beladeposition in die anschließende erste Förderstrecke (27) bewegt werden, um dort eine bis in den Stanzkopf (5) reichende Reihe zu bilden, in denen die Verbindungselemente (2) in Dichtlage aneinander anschließen, und einen Vorschub der Verbindungselemente an den Stanzkopf zu bewirken, **dadurch gekennzeichnet**,
daß das Vorschubelement (39) eine Vorschubfläche (39'') bildet, die für den Vorschub aus einer Ausgangsstellung außerhalb der Förderstrecke (20, 27) in die Förderstrecke hineinbewegt und in einem anschließenden Vorschubhub entlang der Förderstrecke bewegt wird, daß das Vorschubelement jeweils unmittelbar nach erfolgtem Vorschub in die Ausgangsstellung zurückbewegt wird, in der sich das Vorschubelement bzw. dessen Vorschubfläche (39'') wieder außerhalb der Förderstrecke (20, 27) befinden, und daß an der Beladeposition (32) wenigstens ein als Rücklaufsperre (31) ausgebildeter Anschlag für die Verbindungselemente (2) vorgesehen ist, den die Verbindungselemente erst beim Vorschub durch das Vorschubelement (39) passieren.

2. Vorrichtung nach Anspruch 1, dadurch gekennzeichnet, daß das Zuführen der Verbindungselemente (2) an die Beladeposition (32) jeweils über eine äußere Förderstrecke einzeln durch Einschießen, vorzugsweise mit Durckluft erfolgt.

3. Vorrichtung nach Anspruch 2, dadurch gekennzeichnet, daß das Zuführen der Verbindungselemente (2) an die Beladeposition (32) über einen flexiblen Schlauch (21) erfolgt.

4. Vorrichtung nach einem der Ansprüche 1 - 3, dadurch gekennzeichnet, daß die Verbindungselemente Muttern (2) sind, daß die Muttern in der äußeren Zuführung (21) mit ihren Achsen senkrecht zur Förderrichtung und parallel zueinander angeordnet sind, und daß die äußere Zuführung (21) von einem Schlauch mit einem an die Form der Muttern (2) im Querschnitt angepaßten rechteckförmigen Kanal (21') gebildet ist.

5. Vorrichtung nach einem der Ansprüche 1 - 4, dadurch gekennzeichnet, daß der wenigstens eine Anschlag von einem federnden Anschlagelement oder einer Klinke (31) gebildet ist.

6. Vorrichtung nach einem der Ansprüche 1 - 5, dadurch gekennzeichnet, daß am Ende der starren Zuführung oder im Stanzkopf (5) wenigstens eine erste Sensoreinrichtung (34) vorgesehen ist, die bei Vorhandensein eines Verbindungselementes (2) im Stanzkopf (5) ein dieses Vorhandensein bestätigendes Steuersignal an eine Steuereinrichtung (36) liefert, und daß die Steuereinrichtung (36) eine externe Zuführeinrichtung (22) sowie die Beladeeinrichtung (26) bzw. das dortige Verschubelement (39) derart steuert, daß das Verbindungselement (2) einzeln und in zeitlicher Folge nacheinander an die Beladeposition (32) eingeschossen und von dort jeweils durch das eine Vorschub- und Rückhubbewegung ausführende Vorschubelement (39) in die erste Förderstrecke (27) bewegt werden, und zwar solange, bis das Steuersignal der ersten Sensoreinrichtung anliegt oder dieser das Vorhandensein eines Verbindungselementes anzeigt.

7. Vorrichtung nach Anspruch 6, dadurch gekennzeichnet, daß an der Zuführung oder an einer dieser Position bildenden zweiten Förderstrecke (20) vor der Beladeposition (32) wenigstens eine zweite Sensoreinrichtung (38) vorgesehen ist, die beim Vorbeibewegen eines an die Beladeposition (32) geförderten Verbindungselement (2) ein dieses Vorbeibewegen bestätigendes bzw. quittierendes zweites Steuersignal liefert, und daß die Betätigung des Vorschubelementes (39) jeweils erst dann erfolgt, wenn das zweite Steuersignal vorliegt.

8. Vorrichtung nach einem der Ansprüche 1 - 7, dadurch gekennzeichnet, daß das Vorschubelement eine Vorschubschwinge (39) ist.

9. Vorrichtung nach einem der Ansprüche 1 - 8, dadurch gekennzeichnet, daß das Vorschubelement (39) durch eine Betätigungseinrichtung, vorzugsweise durch einen Zylinder (42) betätigt wird.

10. Vorrichtung nach einem der Ansprüche 1 - 9, gekennzeichnet durch eine dritte, die Hubbewegung der Presse erfassende Sensoreinrichtung (53).

11. Vorrichtung nach einem der Ansprüche 1 - 10, gekennzeichnet durch wenigstens einen Magneten (43, 44) an der Beladeposition (32) und/oder an einer auf die Beladeposition folgenden Position der ersten Förderstrecke (27).

12. Vorrichtung nach einem der Ansprüche 1 - 11, dadurch gekennzeichnet, daß die Steuerung einer äußeren Zuführeinrichtung (22) und der Beladeeinrichtung (26) über eine Steuerelektronik (36) in Abhängigkeit von an der starren Zuführung (20, 27) vorgesehenen Sensoren (34, 38) bzw. deren Steuersignale derart erfolgen, daß immer dann, wenn an der Beladeposition eine vorgegebene Anzahl von Verbindungselementen (2) nicht vorhanden ist, Verbindungselemente (2) an die Beladeposition (32) durch Einschießen gefördert werden, und zwar solange, bis dort die erforderliche Anzahl von Verbindungselementen (2) vorhanden ist, und/oder daß dann, wenn im Stanzkopf (5) oder im dortigen Stößelkanal ein Verbindungselement nicht vorhanden ist, durch Bewegen des Vorschubelements (39) sowie durch Einschießen von Verbindungselementen an die Beladeposition (32) die erste Förderstrecke solange nachgeladen wird, bis das erste, in dieser Förderstrecke vorhandenen Verbindungselement sich im Stößelkanal befindet.

## Claims

1. Device for feeding fastening components, in particular nuts (2), as well as for securing them in work pieces (1) by joining and pressing, for use in a press, with a punching head (5), with which the joining and pressing of the fastening components (2) takes place,
with a forward-feed- and loading device (26), and
with a rigid feed (20,27),
whereby the tool with its punching head (5), with its loading device (26) and with its first conveyor section (27) can be fixed to one of two counteracting tool- or press parts,
whereby the fastening components are, in each case individually, fed to the loading position (32) of the loading device (26), and in each case moved, by a forward-feed element located there, from the loading position into the adjoining first conveyor section (27), in order to form there a row extending right into the punching head (5), in which the fastening components (2) are contiguous to one another, and to effect a forward-feed of the fastening components to the punching head,
**characterized in that**
the forward-feed element (39) forms a forward-feed face (39''), which for the forward-feed action moves from a starting position outside the conveyor section (20, 27) into the conveyor section, and which in a subsequent forward-feed stroke is moved along the conveyor section; that in each case immediately after the forward-feed movement has taken place, the forward-feed element is moved back into the starting position, in which the forward-feed element or its forward-feed face (39'') are once again located outside the conveyor section (20, 27); and that at the loading position (32) at least one limit stop, designed as a return stop (31), is provided for the fastening components (2), which the fastening components pass only when fed forward by the forward-feed element (39).

2. Device in accordance with claim 1, characterized in that feeding of the fastening components (2) to the loading position (32) takes place in each case via an external conveyor section, through firing in individually, preferably with compressed air.

3. Device in accordance with claim 2, characterized in that feeding of the fastening components (2) to the loading position (32) takes place via a flexible hose (21).

4. Device in accordance with one of the claims 1 - 3, characterized in that the fastening components are nuts (2); that the nuts are arranged in the external feed (21) with their axes perpendicular to the conveyor direction and parallel to one another; and that the external feed (21) is formed by a hose with a rectangular-shaped channel (21') which - in its cross-section - is adapted to the shape of the nuts (2).

5. Device in accordance with one of the claims 1 - 4, characterized in that the limit stop - of which there is at least one - is formed from a sprung limit stop element or a latch (31).

6. Device in accordance with one of the claims 1 - 5, characterized in that at the end of the rigid feed or in the punching head (5), at least one first sensor device (34) is provided which, when a fastening component (2) is present in the punching head (5), supplies a control signal to a control device (36) to confirm this presence, and that the control device (36) controls an external feed device (22) as well as the loading device (26), or the forward-feed element (39) located there, in such a way that the fastening component (2) is shot in individually and chronological order, one after another, to the loading position (32) and from there is moved in each case by the forward-feed element (39) - which executes a forward-feed and return stroke movement - into the first conveyor section (27), and in fact until the control signal of the first sensor device has been received, or it indicates the presence of a fastening component.

7. Device in accordance with claim 6, characterized in that provided on the feed, or on a second conveyor section (20) forming this position, in front of the loading position (32), there is at least one second sensor device (38) which, when a fastening component (2) transported to the loading position (32) is moved past it, supplies a second control signal confirming or acknowledging this movement past, and that the actuation of the forward-feed element (39) takes place in each place only when the second control signal has been received.

8. Device in accordance with one of the claims 1 - 7, characterized in that the forward-feed element is a forward-feed rocker arm (39).

9. Device in accordance with one of the claims 1 - 8, characterized in that the forward-feed element (39) is actuated by an actuating device, preferably by a cylinder (42).

10. Device in accordance with one of the claims 1 - 9, characterized by a third sensor device (53) which records the stroke movement of the press.

11. Device in accordance with one of the claims 1 - 10, characterized by at least one magnet (43, 44) at the loading position (32) and/or at a position of the first conveyor section (27), following on from the loading position.

12. Device in accordance with one of the claims 1 - 11, characterized in that the control of an external feed device (22) and of the loading device (26) takes place via an electronic control unit (36), depending on sensors (34, 38) provided on the rigid feed (20, 27), or depending their control signals, in such a way that whenever a given number of fastening components (2) is not present at the loading position fastening components (2) are supplied to the loading position (32) by firing in, and in fact until the required number of fastening components (2) is present, and/or that when a fastening component is not present in the punching head (5) or in the plunger channel located there, by movement of the forward-feed element (39) as well as by the firing in of fastening components to the loading position (32), the first conveyor section is reloaded until the first fastening component present in this conveyor section is to be found in the ram channel.

## Revendications

1. Outil pour acheminer des éléments de fixation, en particulier des écrous (2), et les assujettir dans des pièces (1) par aboutement et compression, pouvant être utilisé dans une presse, l'outil comprenant
une tête d'estampage (5) qui effectue l'aboutement et la compression des éléments de fixation (2),
un dispositif d'avancement et de chargement (26), et
un dispositif d'alimentation rigide (20, 27),
dans lequel l'outil peut être fixé, avec sa tête d'estampage (5), son dispositif de chargement (26) et sa voie de transport (27), sur une des deux parties de presse ou d'outil agissant en sens contraire,
dans lequel les éléments de fixation sont acheminés respectivement individuellement dans la position de chargement (32) du dispositif de chargement (26) et sont déplacés par un élément d'avancement qui s'y trouve respectivement de la position de chargement à la première voie de transport connexe (27) pour y former une rangée qui s'étend jusqu'à la tête d'estampage (5), dans laquelle les éléments de fixation (2) se raccordent les uns aux autres en position serrée, et pour effectuer un avancement des éléments de fixation sur la tête d'estampage, caractérisé en ce que l'élément d'avancement (39) forme une surface d'avancement (39'') qui, pour effectuer l'avancement à partir d'une position de départ extérieure à la voie de transport (20, 27), est introduite dans la voie de transport et est déplacée dans une course de transport connexe le long de la voie de transport, en ce que l'élément d'avancement est redéplacé respectivement, immédiatement après avoir effectué un avancement, dans la position de départ, dans laquelle l'élément d'avancement ou sa surface d'avancement (39'') se retrouve à l'extérieur de la voie de transport (20, 27), et en ce que, dans la position de chargement (32), il est prévu pour les éléments de fixation (2) au moins une butée conformée en arrêt antiretour (31) par où les éléments de fixation passent en premier lieu lors de leur avancement par l'élément d'avancement (39).

2. Outil selon la revendication 1, caractérisé en ce que l'acheminement des éléments de fixation (2) à la position de chargement (32) se fait respectivement via une voie de transport externe individuellement par injection, de préférence par de l'air comprimé.

3. Outil selon la revendication 2, caractérisé en ce que l'acheminement des éléments de fixation (2) à la position de chargement (32) se fait via un tuyau flexible (21).

4. Outil selon l'une quelconque des revendications 1 à 3, caractérisé en ce que les éléments de fixation sont des écrous (2), en ce que les écrous sont agencés dans le système d'alimentation externe (21) de manière que leurs axes soient perpendiculaires à la direction de transport et parallèles à celle-ci et en ce que le système d'alimentation externe (21) est formé d'un tuyau flexible comportant un canal (21') en forme de rectangle dont la section transversale est adaptée à la forme des écrous (2).

5. Outil selon l'une quelconque des revendications 1 à 4, caractérisé en ce que la au moins une butée est formée d'un élément de butée élastique ou d'un cliquet (31).

6. Outil selon l'une quelconque des revendications 1 à 5, caractérisé en ce qu'il est prévu à l'extrémité du système d'alimentation rigide ou dans la tête d'estampage (5) au moins un premier dispositif détecteur (34) qui, en présence d'un élément de fixation (2) dans la tête d'estampage (5), délivre un signal de commande confirmant cette présence à un dispositif de commande (36), et en ce que le dispositif de commande (36) commande un dispositif d'alimentation externe (22) ainsi que le dispositif de chargement (26) ou l'élément d'avancement (39) qui s'y trouve de sorte que les éléments de fixation (2), individuellement et progressivement l'un derrière l'autre, soient injectés dans la position de chargement (32) et soient déplacés de là, respectivement, par l'élément d'avancement (39) effectuant un mouvement d'avancement et de course de retour dans la première voie de transport (27), et ce aussi longtemps que le premier dispositif détecteur délivre le signal de commande ou qu'il indique la présence d'un élément de fixation.

7. Dispositif selon la revendication 6, caractérisé en ce qu'il est prévu sur le système d'alimentation ou sur une seconde voie de transport (20) formant cette position, devant la position de chargement (32), au moins un deuxième dispositif détecteur (38), qui, lors du passage d'un élément de fixation (2) acheminé dans la position de chargement (32), délivre un deuxième signal de commande confirmant ou accusant réception de ce passage, et en ce que la commande de l'élément d'avancement (39) ne se fait respectivement que lorsque le deuxième signal de commande est délivré.

8. Dispositif selon l'une quelconque des revendications 1 à 7, caractérisé en ce que l'élément d'avancement est un levier d'avancement oscillant (39).

9. Dispositif selon l'une quelconque des revendications 1 à 8, caractérisé en ce que l'élément d'avancement (39) est commandé par un dispositif d'actionnement, de préférence par un cylindre (42).

10. Dispositif selon l'une quelconque des revendications 1 à 9, caractérisé par un troisième dispositif détecteur (53) qui capte le mouvement de levée de la presse.

11. Dispositif selon l'une quelconque des revendications 1 à 10, caractérisé par au moins un aimant (43, 44) dans la position de chargement (32) et/ou dans une position de la première voie de transport (27) suivant la position de chargement.

12. Dispositif selon l'une quelconque des revendications 1 à 11, caractérisé en ce que la commande d'un dispositif d'alimentation externe (22) et du dispositif de chargement (26) se fait via un circuit électronique de commande (36) en fonction des détecteurs (34, 38) prévus sur le système d'alimentation rigide (20, 27) ou de leurs signaux de commande de sorte que ce ne soit que lorsqu'une quantité prédéterminée d'éléments de fixation (2) n'est pas présente dans la position de chargement que des éléments de fixation (2) soient acheminés dans la position de chargement (32) par injection, et ce, aussi longtemps qu'il n'y a pas la quantité requise d'éléments de fixation (2) et/ou que ce ne soit que, lorsqu'un élément de fixation n'est pas présent dans la tête d'estampage (5) ou dans le canal de coulisseau qui s'y trouve, que, par déplacement de l'élément d'avancement (39) ainsi que par injection d'éléments de fixation dans la position de chargement (32), la première voie de transport soit rechargée jusqu'à ce que le premier élément de fixation présent dans cette voie de transport se trouve dans le canal de coulisseau.
